# EUROPEAN PATENT SPECIFICATION

(11) **EP 0 680 879 B1**
(45) Date of publication and mention of the grant of the patent: **02.09.1998**
(21) Application number: 94106973.4
(22) Date of filing: 04.05.1994
(51) Int. Cl.: B65B 1/34, G01G 13/06, G01G 13/24

(54) **Method for weighing out long pasta and machine for implementing the method**
Verfahren und Vorrichtung zum Wiegen von langgestreckten Teigwaren
Procédé pour peser de pâtes longues et machine pour la mise en oeuvre du procédé

(43) Date of publication of application: 08.11.1995
(73) Proprietor: PAVAN S.p.A., 35015 Galliera Veneta (Padova) (IT)
(72) Inventor: Pavan, Paolo, I-35015 Galliera Veneta (IT)
(74) Representative: Piovesana, Paolo

(56) References cited:
- EP-A- 0 288 415
- US-A- 3 416 619
- US-A- 4 514 959

## Description

This invention relates to a method for weighing out long pasta and a machine for implementing the method.

Machines for weighing out long pasta are known. A first known type of machine comprises a vibrated chute provided with baffles for orientating the pasta and communicating via a shutoff element with a compartment of predetermined volume provided with an openable base. In a position below the chute there is provided a weighing hopper, to the side of which there is a vibrated belt also fed with pasta.

In operating the machine, the pasta fed by an overhead distribution system is introduced into the vibrated chute, where it is maintained always horizontal by virtue of the orientating baffles, and accumulates in its lower compartment. When the compartment is full, the shutoff element upperly closes the compartment, which then contains a volume-metered quantity of pasta of slightly less than the desired weight.

The compartment base is then opened so that the pasta can fall into the weighing hopper which weighs the pasta and by means of a control system operates the belt so that it adds the quantity of pasta required to attain the desired weight.

These known weighing machines have however certain drawbacks, and in particular:
- operational slowness in that the initial weighing of the pasta (rough weighing) and the subsequent weighing (fine weighing) is done in two stages, but in the same hopper,
- contructional complexity.

Other weighing machines are known in which the fine weighing operation, ie the addition of the pasta quantity necessary to attain the predetermined weight, involves adding a known volume of pasta.

Such known machines have however the drawback of poor reliability in that the pasta can have a shape which falsifies its volume, and the machines are not suitable for use with certain types of pasta (wide tagliatelle, thick spaghetti etc.) for which the volume is not strictly related to the weight.
US-A-3416619 discloses a weighing method for potatoes with a rough step in which an empty box receives potatoes for rapid filling up to a sligtly less weight than the final predeterminated one and a second step in which in a second station the partially filled box receives individually and discretely the quantity of potatoes to reach the predetermined weight.

The object of the invention is to obviate these drawbacks by providing a method for weighing out long pasta which enables a high operating rate to be achieved and can be achieved for any type of pasta, irrespective of its irregularity.

This objective is attained according to the invention through a method for weighing long pasta as claimed in claim 1.

To implement the method a machine is provided as claimed in claim 3.

A preferred embodiment of the invention is further described hereinafter with reference to the accompanying drawings, in which:

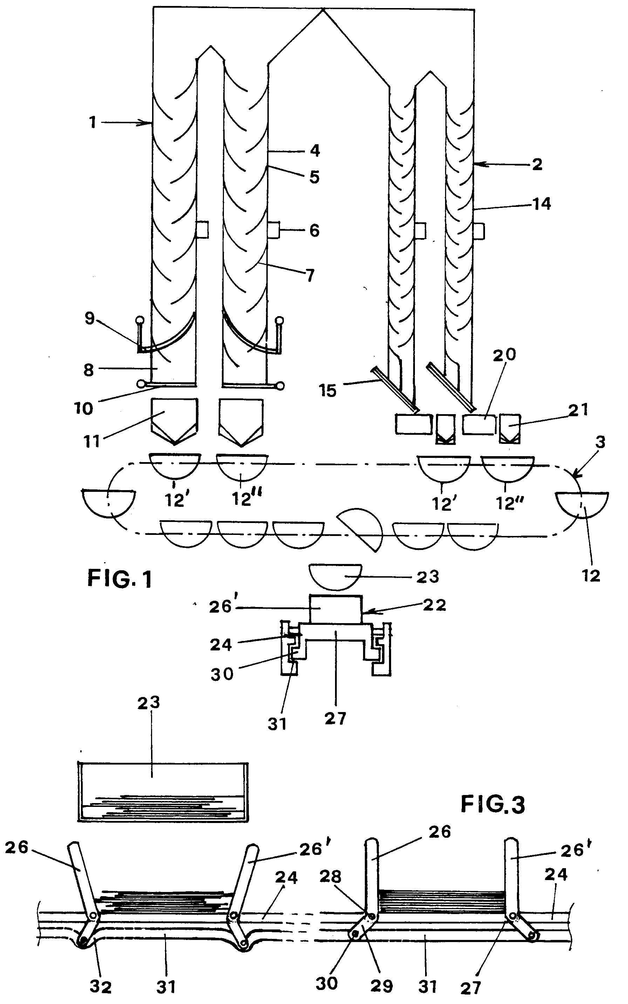

- Figure 1: is a schematic view of a machine for weighing out long pasta according to the invention;

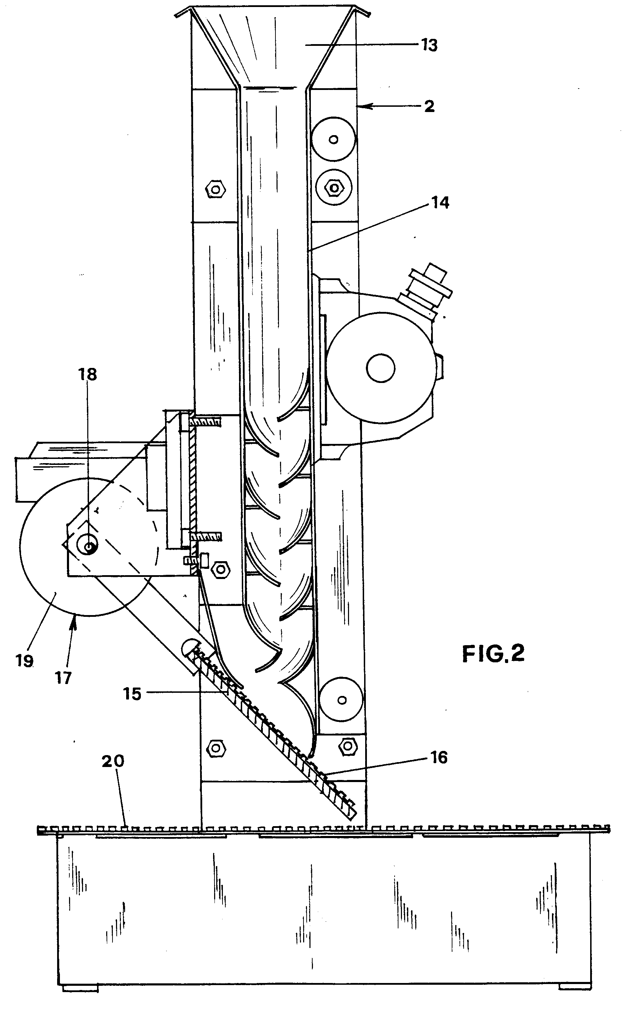

- Figure 2: is an enlarged detail of the fine weighing station; and
- Figure 3: is an enlarged detail of the pasta compacting device.

As can be seen from the figures, the weighing machine according to the invention comprises substantially a pasta rough weighing station 1, a fine weighing station 2 and an endless conveyor, of rotatable bucket type, conveying to a pasta compacting station 22.

Specifically, the rough weighing station comprises two chutes 4 formed from two facing panels 5, of which one is provided with a vibration device 6 and which internally comprise a plurality of fins 7.

The chutes communicate lowerly with a pasta accumulation compartment 8 provided upperly with a shutoff gate 9 and lowerly with a guillotine-type openable base.

In a position below each chute 4 there is provided a load-cell weighing hopper 11, the base of which faces the conveyor 3 comprising rotatable buckets 12.

The fine weighing station 2 also comprises two chutes 13, substantially similar to the chutes of the rough weighing station, with its panels 14 at a closer distance apart. At the lower end of each chute 13 there is an inclined plate 15 covered upperly with a rubber mat 16 comprising a plurality of small transverse recesses with dimensions substantially corresponding to the dimensions of the pasta being processed.

The inclined plate 15 is provided with a vibration device 17 consisting of an eccentric shaft 18 driven by an electric motor 19.

Below the inclined plate 15 there is a longitudinally vibrated horizontal plate 10 covered with a rubber mat similar to the rubber mat 16 and having its discharge end facing weighing hoppers 21 overlying the rotatable buckets 12 of the conveyor belt 3.

The compacting station 22 comprises substantially a horizontally movable hopper 23, below which there is provided a slat-type conveyor belt 24 with its advancement speed equal to that of the hopper 23 and provided with a compacting device in the form of pairs of inclinable transverse side walls 26,26' spaced apart by a distance equal to the length of the pasta. Each wall 26,26' is mounted on a bush 27 pivoted about a shaft 28 rigid with the conveyor belt 24.

The bush is provided with a downwardly inclined appendix 29 provided with a pin 30 slidable within a guide 31 parallel to the surface of the conveyor belt.

The pins 30 of the walls 26,26' of each pair are positioned on the opposite side of the belt, each guide 31 comprising a curved portion 32 with its cavity facing upwards.

In this manner when the pins are guided along the horizontal portion of the grooved guide the walls assume a vertical configuration, whereas when the pins pass along the curved portions 32 the walls are slightly rotated to assume a configuration diverging towards the overlying hopper 23. The machine also comprises a plurality of sensors and control members governed by microprocessors which ensure correct operation of the wighing process.

In operating the weighing machine, the pasta, fed by an overhead distribution system, is introduced into the chutes 4 of the rough weighing station and accumulate in a horizontal configuration within the compartments 8. In the same manner the pasta fed into the fine weighing station 2 accumulates within the chutes 13 and by virtue of the vibration of one of the panels 14 descends onto the inclined plate 15 and then onto the horizontal vibrated plate 20 such that each recess in the rubber covering mat contains substantially a single piece of pasta. When the compartments 8 have been filled with a quantity of pasta weighing slightly less than the weight of the pasta quantity to be packaged, the shutoff gate 9 is operated and the base 10 is opened so that the pasta discharges into the weighing hopper 11. When the weight of the pasta contained in the hoppers 11 has been calculated and memorized, they transfer the pasta into the underlying two rotatable buckets 12' and 12'' of the conveyor 3 and at the same time feed to the fine weighing station 2 a signal for operating the vibrated plate 20 which, under the control of a microprocessor, moves to fill the weighing hopper 21 with a quantity of pasta which when added to the quantity of pasta contained in the weighing hoppers 11 results in the pasta quantity to be contained in the packet. In the meantime the two buckets 12',12'' which were in a position below the hoppers 11 have advanced dragged by the conveyor belt 3 and once positioned below the hoppers 21 receive from them the quantity of pasta previously accumulated.

In the meantime a further two rotatable buckets have been positioned below the hoppers 11 which have again weighed and memorized the quantity of pasta contained in them after a further filling of the compartments 8.

The buckets 12' and 12'' containing the predetermined quantity of pasta are overturned at the compacting station and hence discharge their contents into the hopper 23 lying above the belt 24.

The hopper is then moved parallel to the direction of advancement of the belt 24, the pasta contained in it being discharged onto the belt when the pins 30 are in the curved portions 32 with the result that the two walls 26,26' are in their divergent configuration.

While the hopper returns to its starting position to receive another load of pasta, the two walls 26,26' rotate following the advancement of the belt 24 to assume a vertical configuration and compact the quantity of pasta contained in them, this then being fed to the packaging station.

From the aforegoing it is apparent that the machine for weighing out long pasta according to the invention has numerous advantages, and in particular:
- a high operating rate because of the facility for weighing in different hoppers at different times without interrupting the advancement cycle of the conveyor belt;
- the compacting of the pasta before being fed to the packaging station.

## Claims

1. A method for weighing out long pasta to be packaged, comprising a first rough weighing stage, in a first station (1), of a first pasta quantity up to a weight slightly less than the weight of the pasta to be packaged, and a second weighing stage, of a second quantity of pasta in a second station (2) wherein an information of the value of the weight carried out in the first station (1) is provided to this second station (2) and in this second station (2) a pasta quantity is separately weighed out, the weight of which corresponds to the difference between the predetermined weight of the pasta to be packaged and the weight of the pasta of the first station (1), and the pasta quantities weighed in the first station (1) and in the second station (2) are discharged successively into a single collection container (12) passing through the first and second station (1,2), which is then sent to a compacting station (22).

2. A method as claimed in claim 1, characterised in that the pasta quantity collected in the container (12) is compacted longitudinally before being fed to a packaging station.

3. A machine for weighing out long pasta implementing the method in accordance with one of claims 1 to 2, comprising:
a first station (1) for roughly weighing the pasta quantity to be packaged, comprising a compartment (8) of predetermined volume containing a quantity of pasta weighing slightly less than the weight of the pasta to be packaged, and provided with an openable base (10) facing a weighing hopper (11), a second fine weighing station (2) positioned downstream of the rough weighing station, and comprising a conduit (14) for accumulating the pasta to be fed, said fine weighing station comprising a weighing hopper (21) which on the basis of information received from weighing hopper (11) of the rough weighing station weighs out pasta quantity corresponding to the difference between the total pasta to be packaged and the pasta weighed in the rough weighing station;
- a pasta step-advancement device (16,20) feeding said weighing hopper (21) of the fine weighing station;
- a container (12) receiving in the first station the first quantity of pasta and in the second station the second quantity of pasta;
- means (3,) for conveying said container (12) to a compacting station.

4. A machine as claimed in claim 3, characterised in that said advancement device consists of a vibrated inclined plate (15) the lower end of which faces a longitudinally vibrated horizontal plate (20).

5. A machine as claimed in claim 4, characterised in that each vibrated plate (15,20) is covered with a rubber mat (16) comprising longitudinal recesses, the cross-sections of which correspond substantially to the dimensions of the pasta to be processed.

6. A machine as claimed in claim 3, characterised in that the collection container (12) is a rotatable bucket of an endless conveyor (3).

7. A machine as claimed in claim 6, characterised in that the rotatable bucket (12) containing the quantity of pasta to be packaged feeds a pasta compaction device.

8. A machine as claimed in claim 7, characterised in that the compaction device comprises a conveyor belt (24) provided with transverse side walls (26,26') spaced apart by a distance substantially equal to the length of the pasta, said walls being slightly turned outwards while the pasta to be packaged is fed between them.

9. A machine as claimed in claim 8, characterised in that each wall (26,26') is pivoted on a shaft (28) rigid with the conveyor belt (24) and is provided with an appendix (29) which engages via a pin (30) in a guide (31) extending parallel to the conveyor belt, said guide comprising two curved portions (32) at which the wall (26,26') is turned outwards.

## Patentansprüche

1. Verfahren zum Auswiegen von langgestreckten, zu verpackenden Teigwaren, welches eine erste grobe Wiegestufe in einer ersten Station (1) für eine erste Teigwarenmenge bis zu einem Gewicht knapp unterhalb des Gewichts der zu verpackenden Teigwaren und eine zweite Wiegestufe für eine zweite Menge von Teigwaren in einer zweiten Station (2) umfaßt, wobei die Information über die Höhe des Gewichts, das in der ersten Station (1) erfolgt, der zweiten Station (2) zugeführt wird und in der zweiten Station (2) eine Teigwarenmenge getrennt ausgewogen wird, wobei das Gewicht derselben der Differenz zwischen dem vorgegebenen zu verpackenden Teigwarengewicht und dem Gewicht der Teigwaren der ersten Station (1) entspricht, und die Teigwarenmengen, die in der ersten Station (1) und in der zweiten Station (2) gewogen werden, nacheinander an einen einzigen Sammelbehälter (12) abgegeben werden, der die erste und zweite Station (1, 2) passiert, welcher dann einer Verdichtungsstation (22) zugeführt wird.

2. Verfahren nach Anspruch 1, dadurch gekennzeichnet, dass die Teigwarenmenge, die in dem Behälter (12) gesammelt wird, in Längsrichtung verdichtet wird, bevor sie der Verpackungsstation zugeführt wird.

3. Maschine zum Auswiegen langgestreckter Teigwaren zur Durchführung des Verfahrens nach einem der Ansprüche 1 bis 2, welche
eine erste Station (1) zum groben Wiegen der zu verpackenden Teigwarenmenge, die ein Fach (8) mit vorgegebenem Volumen aufweist, das eine Teigwarenmenge enthält, die etwas weniger wiegt als das Gewicht der zu verpackenden Teigwaren und das mit einer zu öffnenden Basis (10) versehen ist, die einem Wiegetrichter (11) gegenüberliegt, eine zweite Feinwiegestation (2), die stromabwärts der Grobwiegestation angeordnet ist und eine Leitung (14) zum Sammeln der zuzuführenden Teigwaren umfaßt, wobei die besagte Feinwiegestation einen Wiegetrichter (21) aufweist, der aufgrund der Information, die er von dem Wiegetrichter (11) der Grobwiegestation erhält, eine Teigwarenmenge auswiegt, die der Differenz zwischen den gesamten zu verpackenden Teigwaren und der in der Grobwiegestation gewogenen Teigwaren entspricht; sowie
- eine Teigwarenstufenfördervorrichtung (16, 20), welche den besagten Wiegetrichter (21) der Feinwiegestation beschickt;
- einen Behälter (12), der in der ersten Station die erste Teigwarenmenge und in der zweiten Station die zweite Teigwarenmenge aufnimmt; und
- Mittel (3) zum Transport des besagten Behälters (12) zu einer Verdichtungsstation.

4. Maschine nach Anspruch 3, dadurch gekennzeichnet, dass die besagte Fördervorrichtung aus einer vibrierenden schrägen Platte (15) besteht, deren unteres Ende einer längsvibrierenden horizontalen Platte (20) gegenüberliegt.

5. Maschine nach Anspruch 4, dadurch gekennzeichnet, dass jede vibrierende Platte (15, 20) mit einer Gummimatte (16) bedeckt ist, welche Längsausnehmungen aufweist, deren Querschnitte im wesentlichen den Abmessungen der zu verarbeitenden Teigwaren entsprechen.

6. Maschine nach Anspruch 3, dadurch gekennzeichnet, dass der Sammelbehälter (12) ein umlaufender Becher eines Endlosförderers (3) ist.

7. Maschine nach Anspruch 6, dadurch gekennzeichnet, dass der umlaufende Becher (12), der die Menge der zu verpackenden Teigwaren enthält, eine Teigwarenverdichtungsvorrichtung beschickt.

8. Maschine nach Anspruch 7, dadurch gekennzeichnet, dass die Verdichtungsvorrichtung ein Förderband (24) aufweist, das mit schräg verlaufenden Seitenwänden (26, 26') versehen ist, die in einem Abstand angeordnet sind, der im wesentlichen der Länge der Teigwaren entspricht, wobei die Wände leicht nach außen gedreht sind, wenn die zu verpackenden Teigwaren dazwischen zugeführt werden.

9. Maschine nach Anspruch 8, dadurch gekennzeichnet, dass jede Wand (26, 26') an einer starr mit dem Förderband (24) verbundenen Achse (28) angelenkt und mit einem Fortsatz (29) versehen ist, welcher mit einem Stift (30) in eine Führung (31) eingreift, die sich parallel zum Förderband erstreckt, wobei die Führung zwei Kurvenabschnitte (32) umfaßt, an denen die Wand (26, 26') nach außen gedreht wird.

## Revendications

1. Procédé pour peser de longues pâtes devant être empaquetées, comprenant une première étape de pesée approximative, dans un premier poste (1), d'une première quantité de pâtes jusqu'à l'obtention d'un poids légèrement inférieur au poids des pâtes devant être empaquetées, et une seconde étape de pesée, d'une seconde quantité de pâtes dans un second poste (2), au cours duquel l'on transmet à ce second poste (2) une information de la valeur du poids obtenu dans le premier poste (1) et l'on pèse séparément dans ce second poste (2) une quantité de pâtes dont le poids correspond à la différence entre le poids prédéterminé des pâtes devant être empaquetées et le poids des pâtes obtenu dans le premier poste (1), et l'on décharge successivement les quantités de pâtes pesées dans le premier poste (1) et dans le second poste (2) dans un unique récipient de collecte (12) passant dans le premier et le second poste (1,2), lequel est ensuite dirigé vers un poste de compactage (22).

2. Procédé selon la revendication 1, caractérisé en ce que la quantité de pâtes collectée dans le récipient (12) est compactée longitudinalement avant d'arriver à un poste d'empaquetage.

3. Machine pour peser de longues pâtes mettant en oeuvre le procédé selon l'une des revendications 1 et 2, comprenant :
- un premier poste (1) pour une pesée approximative de la quantité de pâtes devant être empaquetées, comprenant un compartiment (8) d'un volume prédéterminé, pouvant contenir une pesée de pâtes légèrement inférieure au poids des pâtes devant être empaquetées, et muni d'une base (10), pouvant s'ouvrir, se trouvant en face d'une trémie de pesée (11), un second poste (2) de pesée fine situé en aval du poste de pesée approximative, et comprenant un conduit (14) permettant l'accumulation des pâtes à charger, ledit poste de pesée fine comprenant une trémie de pesée (21), laquelle, sur la base de l'information reçue de la trémie de pesée (11) du poste de pesée approximative, permet de peser une quantité de pâtes correspondant à la différence entre la quantité totale de pâtes devant être empaquetées et la quantité de pâtes pesées dans le poste de pesée approximative;
- un dispositif (16, 20) d'avancement pas-à-pas des pâtes alimentant ladite trémie de pesée (21) du poste de pesée fine;
- un récipient (12) recevant dans le premier poste la première quantité de pâtes et dans le second poste la seconde quantité de pâtes;
- des moyens (3) pour acheminer ledit récipient (12) vers un poste de compactage.

4. Machine selon la revendication 3, caractérisée en ce que ledit dispositif d'avancement consiste en une plaque inclinée (15) vibrante dont l'extrémité inférieure se trouve en face d'une plaque horizontale (20) vibrant longitudinalement.

5. Machine selon la revendication 4, caractérisée en ce que chaque plaque vibrante (15, 20) est recouverte d'un tapis en caoutchouc (16) comprenant des rainures longitudinales dont la section transversale correspond sensiblement aux dimensions des pâtes à traiter.

6. Machine selon la revendication 3, caractérisée en ce que le récipient de collecte (12) est un godet pivotant d'un convoyeur (3) sans fin.

7. Machine selon la revendication 6, caractérisée en ce que le godet pivotant (12) contenant la quantité de pâtes devant être empaquetées alimente un dispositif de compactage des pâtes.

8. Machine selon la revendication 7, caractérisée en ce que le dispositif de compactage comprend un tapis roulant (24) pourvu de parois latérales transversales (26, 26') espacées l'une de l'autre d'une distance sensiblement égale à la longueur des pâtes, lesdites parois étant légèrement tournées vers l'extérieur au moment où les pâtes devant être empaquetées sont chargées entre elles.

9. Machine selon la revendication 8, caractérisée en ce que chaque paroi (26, 26') pivote autour d'un axe (28) solidaire du tapis roulant (24) et est pourvue d'un appendice (29) qui s'engage par l'intermédiaire d'une goupille (30) dans un guide (31) s'étendant parallèlement au tapis roulant, ledit guide comprenant deux parties incurvées (32) à l'endroit où la paroi (26, 26') est tournée vers l'extérieur.
